# EUROPÄISCHE PATENTSCHRIFT

(11) **EP 0 857 327 B1**
(45) Veröffentlichungstag und Bekanntmachung des Hinweises auf die Patenterteilung: **29.01.2003**
(21) Anmeldenummer: 96917354.1
(22) Anmeldetag: 17.06.1996
(51) Int. Cl.: G05D 16/20, G03G 15/00, G01C 1/00, G01D 5/14

(54) **EINRICHTUNG ZUM REGELN DES DRUCKS IN EINER DRUCKKAMMER**
APPARATUS CONTROLLING THE PRESSURE IN A COMPRESSION CHAMBER
DISPOSITIF DE REGULATION DE LA PRESSION DANS UNE CHAMBRE DE COMPRESSION

(30) Priorität: 27.10.1995 DE 19540165
(43) Veröffentlichungstag der Anmeldung: 12.08.1998
(73) Patentinhaber: Océ Printing Systems GmbH, 85586 Poing (DE)
(72) Erfinder: ECKARDT, Andreas, D-80337 München (DE); SCHREIEDER, Josef, D-8433 Malgersdorf (DE); WINTER, Hans, D-80634 München (DE)
(74) Vertreter: Schaumburg, Thoenes & Thurn
(86) Internationale Anmeldenummer: DE9601067
(87) Internationale Veröffentlichungsnummer: WO97016777

(56) Entgegenhaltungen:
- EP-A- 0 511 459
- EP-A- 0 650 107
- WO-A-94/09408
- DE-A- 3 723 284
- DE-A- 3 726 885
- DE-A- 3 732 958
- DE-U- 9 302 758
- PATENT ABSTRACTS OF JAPAN Bd. 012, Nr. 460 (P-795) 05 Dezember 1988 & JP 63 184 116 A (NIPPON DENSO CO LTD) 29 Juli 1988

## Beschreibung

Die Erfindung betrifft eine Einrichtung zum Regeln des Drucks in einer Druckkammer, insbesondere in einer pneumatischen Bremsvorrichtung für einen bahnförmigen Aufzeichnungsträger, bei dem ein Ist-Druck in der Druckkammer abhängig von einem Ist-Drehwinkel eines Drehventils eingestellt wird.

Eine derartige Einrichtung ist aus der Druckschrift WO 94/09 408 bekannt. Der Ist-Druck in der Druckkammer ist ein Unterdruck gegenüber dem Luftdruck außerhalb der Druckkammer. Der Unterdruck saugt über Saugkanäle in der Oberfläche der Druckkammer den Aufzeichnungsträger, auf den ein Druckbild gedruckt wird, an. Durch das Ansaugen und eine damit verbundene hohe Reibkraft zwischen Aufzeichnungsträger und Oberfläche der Druckkammer kommt es zum Bremsen einer Transportbewegung des Aufzeichnungsträgers. Ein in der Druckkammer angeordneter Drucksensor erfaßt den Ist-Druck, der durch eine Regeleinheit mit einem vorgegebenen Soll-Druck verglichen wird, wobei eine Druckabweichung bestimmt wird. Abhängig von der Druckabweichung wird durch die Regeleinheit ein Gleichstrommotor zum Stellen des Drehwinkels des Drehventils mit definierten Spannungsimpulsen gesteuert, um die Druckabweichung zu reduzieren oder völlig zu beseitigen.

Ist am Drehventil ein bestimmter Ist-Drehwinkel eingestellt, indem z.B. ein im Ventil vorhandener Drehkolben ausgehend von einer Referenzstellung um den Ist-Drehwinkel gedreht wurde, so verändert sich der Druck in der Druckkammer aufgrund von Druckausgleichsprozessen allmählich, bis sich letztlich ein zu dem Drehwinkel gehörender Druck in der Druckkammer aufbaut. Der Druckaufbau in der Druckkammer erfolgt damit relativ träge. Die Regeleinheit kann eine vorhandene Druckabweichung erst spät feststellen, und steuert den Gleichstrommotor mit erheblicher Zeitverzögerung an, um die Druckabweichung zu beseitigen. Die Trägheit des Druckaufbaus verlangsamt somit die Regelung auf Soll-Druck.

Nachteilig wirkt sich diese Trägheit insbesondere aus, wenn sich die Reibverhältnisse im Drehventil zeitabhängig verändern, so daß bei einer Ansteuerung des Gleichstrommotors mit den definierten Spannungsimpulsen ein nicht diesen Spannungsimpulsen entsprechender Drehwinkel am Stellventil eingestellt wird, womit sich eine mit zunehmendem Verschleiß des Drehventils größer werdende Druckabweichung ergibt. Weiterhin kann aufgrund toleranzabhängiger Unterschiede bei den Gleichstrommotoren bei gleicher Ansteuerung des Gleichstrommotors der erreichte Drehwinkel des Drehventils unterschiedlich sein. Dadurch kommt es ebenfalls zu Druckabweichungen, die von der Regeleinheit mit Hilfe des Drucksensors erst mit Verzögerung festgestellt werden.

Die Trägheit der Regelung führt dazu, daß der Ist-Druck in der Druckkammer vom Soll-Druck über eine lange Zeit abweichen kann. Die pneumatische Bremsvorrichtung bremst den bahnförmigen Aufzeichnungsträger in dieser Zeit entweder zu schwach oder zu stark. Beide Fälle führen dazu, daß es zu Fehlern beim Drucken kommt und sich das Druckbild verschlechtert.

Aus der DE 37 23 284 A1 ist eine Druckregelung bekannt, bei der ein Drehventil zunächst durch Messung einer Ist-Ventillage und Vergleich mit einer Soll-Ventillage eingestellt wird und dann der Solldruck über das Meßsignal eines Druckfühlers feingeregelt wird.

Aus der JP 63-184 116 A ist ein Verfahren zum Einstellen des Drucks in einer Bremsanlage bekannt. Der Druck einer Bremsflüssigkeit wird dabei zunächst durch Regelung der Kolbenlage eines Ventilkolbens und dann durch Erfassen des Ist-Drucks mit anschließender Regelung eingestellt.

In der DE 93 02 758.3 U1 ist eine Sensoranordnung zum Erfassen des Drehwinkels eines Körpers beschrieben, die eine magnetische Anordnung zum Erzeugen eines Magnetfeldes und einen Magnetfeldsensor zum Erzeugen eines elektrischen Signals enthält, das einen zumindest annähernden sinusförmigen Verlauf abhängig von der Richtung des den Magnetfeldsensor durchsetzenden Magnetfeldes hat. Beim Verstellen des Drehwinkels erfolgt eine Relativbewegung zwischen Magnetfeld und Magnetfeldsensor.

Aufgabe der Erfindung ist es, eine Einrichtung und eine Sensoranordnung zum Regeln des Drucks in einer Druckkammer anzugeben, die es gestatten, den Soll-Druck in der Druckkammer schnell einzustellen und größere Druckabweichungen zu vermeiden.

Gemäß der Erfindung wird eine Sensoranordnung zum Erfassen des Drehwinkels eines Drehventils vorgeschlagen. Der Sensor hat einen Magnetfeldsensor zum Erzeugen eines elektrischen Signals mit zumindest annähernd sinusförmigem Verlauf abhängig von der Richtung eines den Magnetfeldsensor durchsetzenden Magnetfeldes und eine magnetische Anordnung zum Erzeugen des Magnetfeldes, wobei beim Verstellen des Drehwinkels eine Relativdrehung zwischen Magnetfeld und Magnetfeldsensor erfolgt. Der Sensor umfaßt einen magnetischen Referenzsensor, der ein Referenzsignal beim Einwirken des Magnetfeldes in einem vorbestimmten Referenzwinkelbereich derart erzeugt, daß vom Referenzwinkel ausgehend geeignete Drehwinkel zur Regelung des Drucks einstellbar sind.

Beim Verstellen des Drehwinkels erfolgt eine Relativdrehung zwischen Magnetfeld und Magnetfeldsensor, wodurch das Erfassen des Drehwinkels berührungslos erfolgt. Zweckmäßigerweise dreht sich dabei das Magnetfeld und der mit Leitungsanschlüssen versehene Magnetfeldsensor ruht. Durch den Einsatz eines berührungslosen Drehwinkelsensors ist ein Verschleiß des Drehwinkelsensors ausgeschlossen. Ein Überdrehen des Sensors und ein damit verbundener Schaden am Sensor können nicht eintreten, da Magnetfeld und Magnetfeldsensor mechanisch voneinander getrennt sind.

Der Sensor wird insbesondere zur Verwendung in einem Verfahren zum Regeln des Drucks in einer Druckkammer, insbesondere in einer pneumatischen Bremsvorrichtung für einen bahnförmigen Aufzeichnungsträger vorgeschlagen. Bei dem Verfahren wird ein Ist-Druck in der Druckkammer abhängig von einem Ist-Drehwinkel eines Drehventils eingestellt. Der Ist-Drehwinkel des Drehventils und der Ist-Druck in der Druckkammer werden erfaßt. Ein Soll-Druck und ein diesem Soll-Druck zugeordneter Soll-Drehwinkel werden vorgegeben, eine Druckabweichung zwischen Ist-Druck und Soll-Druck sowie eine Drehwinkelabweichung zwischen Ist-Drehwinkel und Soll-Drehwinkel werden bestimmt und eine Stelleinrichtung stellt den Drehwinkel am Drehventil zunächst abhängig von der Drehwinkelabweichung und dann abhängig von der Druckabweichung ein.

Durch das Erfassen des Ist-Drehwinkels wird bei der Erfindung neben dem Ist-Druck eine zweite Regelgröße in der Regeleinheit zum Regeln verwendet. Die Regeleinheit erfaßt sodann Druckabweichungen und Drehwinkelabweichungen durch Differenzbildung zwischen Soll-Druck und Ist-Druck bzw. zwischen Soll-Drehwinkel und Ist-Drehwinkel. Zur Beseitigung der Druckabweichung nur durch Erfassen des Ist-Drucks ist aufgrund des trägen Druckaufbaus in der Druckkammer eine lange Regelzeit notwendig. Die über den sofort erfaßbaren Ist-Drehwinkel berechnete Drehwinkelabweichung kann jedoch unmittelbar nach der Ansteuerung der Stelleinrichtung, die z.B. durch einen Gleichstrommotor gebildet ist, vermindert werden. Um größere Druckabweichungen über eine längere Zeit in der Druckkammer zu vermeiden, wird deshalb zum Einstellen eines bestimmten Soll-Drucks zunächst im Regelkreis die Drehwinkelabweichung beseitigt, indem die Stelleinrichtung so gesteuert wird, daß der Ist-Drehwinkel dem Soll-Drehwinkel entspricht. Da ein bestimmter Soll-Drehwinkel einem bestimmten Soll-Druck zugeordnet ist, d.h. daß sich nach längerer Zeit in der Druckkammer bei dem bestimmten Soll-Drehwinkel in etwa der bestimmte Soll-Druck einstellt, liegt der sich einstellende Ist-Druck in der Nähe des Soll-Drucks.

Hat sich nach einer bestimmten Zeitspanne ein annähernd stabiler Ist-Druck in der Druckkammer aufgebaut, so wird gegebenenfalls eine erfaßte, verbleibende Druckabweichung beseitigt, indem die Stelleinrichtung mit weiteren Spannungsimpulsen angesteuert wird. Bei der Erfindung stellt sich der Soll-Druck in der Druckkammer schnell ein, da aufgrund der sofortigen Korrektur der Drehwinkelabweichung die Druckabweichung in der Druckkammer niedrig ist und somit auch schnell beseitigt werden kann.

Eine bevorzugte Ausführungsform der Erfindung besteht darin, daß zunächst eine Grobeinstellung des Drucks in der Druckkammer durch Einregeln des dem Soll-Druck zugeordneten Soll-Drehwinkels abhängig von der Drehwinkelabweichung und danach eine Feinregelung auf der Grundlage der Druckabweichung erfolgt. Durch eine Grobeinstellung des Drucks abhängig von der Drehwinkelabweichung wird eine große Druckabweichung schnell beseitigt bzw. sie kommt gar nicht erst zustande, da der Ist-Drehwinkel unmittelbar nach der Ansteuerung der Stelleinrichtung erfaßt werden kann. Hat sich nach einer bestimmten Zeit ein stabiler Druck in der Druckkammer aufgebaut und sind noch kleine Druckabweichungen vorhanden, so wird die geringe Druckabweichung beseitigt, indem ein die Druckabweichung ausgleichender Drehwinkel am Drehventil eingestellt wird. Es erfolgt also ein Nachregeln des Drucks. Die Druckabweichung hat ihre Ursache z.B. in Unterschieden zwischen den Aufzeichnungsträgern, die trotz Normungen nicht ganz zu vermeiden sind, oder in einer Verschlechterung der Druckverhältnisse in der Druckkammer durch ein gegebenenfalls vorhandenes volles Staubfilter in einer Verbindungsleitung zwischen der Druckkammer und dem Drehventil sowie in weiteren Störgrößen.

Eine weitere bevorzugte Ausführungsform der Erfindung besteht darin, daß das Drehventil ein Drehkolbenventil ist, das in einem ersten Winkelbereich einen Druckausgleich zwischen einem Umgebungsdruck und dem Druck in der Druckkammer gestattet, und daß das Drehkolbenventil in einem an den ersten Winkelbereich angrenzenden zweiten Winkelbereich mit zunehmendem Drehwinkel einen zumindest annähernd linear verlaufenden Druck in der Druckkammer einstellt.

Der Aufbau eines solchen Drehkolbenventils kann der Druckschrift WO 94/09 408 entnommen werden. Der erste Winkelbereich ist notwendig, um ein schnelles Entlüften der Druckkammer zu ermöglichen, wenn es z.B. zu Störungen bei der Aufzeichnung kommt. Der zweite Winkelbereich, in dem sich das Drehkolbenventil beim Regeln des Drucks durch die Regeleinheit befindet, schließt sich unmittelbar an den ersten Winkelbereich an, um ein schnelles Entlüften der Druckkammer in bestimmten Betriebssituationen zu gewährleisten. Zum Entlüften muß nur ein kleiner Winkelbereich überschritten werden, um aus dem zweiten Winkelbereich in den ersten Winkelbereich zu gelangen. Da der Druck in der Druckkammer mit zunehmendem Drehwinkel linear verläuft, ist über den gesamten zweiten Winkelbereich eine gleichbleibende Ansteuerung der Stelleinrichtung möglich, um gleiche Wirkungen zu erreichen. Steuert die Regeleinheit die Stelleinrichtung mit gleichen, definierten Spannungsimpulsen an, so ergibt sich im gesamten zweiten Winkelbereich aufgrund gleicher Spannungsimpulse eine gleiche Zunahme des Drehwinkels und aufgrund der Linearität des Druckanstiegs eine gleiche Veränderung des Drucks in der Druckkammer.

Die Erfindung betrifft weiterhin eine Einrichtung zum Regeln des Drucks in einer Druckkammer, insbesondere in einer pneumatischen Bremsvorrichtung für einen Aufzeichnungsträger. Die Einrichtung enthält ein Drehventil zum Einstellen eines Ist-Drucks in der Druckkammer abhängig von einem Ist-Drehwinkel und einen Drehwinkelsensor zum Erfassen des Ist-Drehwinkels sowie einen Drucksensor zum Erfassen des Ist-Drucks. Die Einrichtung hat weiterhin eine Steuerung zur Vorgabe eines Soll-Drucks und eines zugehörigen Soll-Drehwinkels, wobei die Steuerung eine Druckabweichung zwischen Ist-Druck und Soll-Druck sowie eine Drehwinkelabweichung zwischen Ist-Drehwinkel und Soll-Drehwinkel bestimmt und wobei die Steuerung eine Stelleinrichtung zum Einstellen des Drehwinkels zunächst abhängig von der Drehwinkelabweichung und dann abhängig von der Druckabweichung ansteuert.

Durch die Verwendung einer derartigen Einrichtung wird erreicht, daß der Soll-Druck in der Druckkammer schnell eingestellt werden kann und größere Druckabweichungen nicht auftreten.

Bei dem erfindungsgemäßen Sensor ist ein magnetischer Referenzsensor im Wirkungsbereich des Magnetfeldes angeordnet. Dadurch wird bewirkt, daß das Magnetfeld, das den Magnetfeldsensor durchsetzt, auch den Referenzsensor durchsetzt, so daß weitere konstruktive Maßnahmen bezüglich des Referenzsensors entfallen. Der Referenzsensor bewirkt, daß ein als Referenzwinkelbereich bezeichneter Winkelbereich des elektrischen Signals des Magnetfeldsensors eindeutig definiert wird. In diesem Referenzwinkelbereich tritt neben dem elektrischen Signal des Magnetfeldsensors auch ein charakteristisches Referenzsignal auf. Wird der Sensor z.B. in einer Regeleinheit verwendet, so kann zu Beginn eines Regelvorgangs ein definierter Drehwinkel eingestellt werden, in dem bei einem Suchlauf der Referenzwinkelbereich ausgewählt wird. Vom Referenzwinkelbereich ausgehend lassen sich dann eindeutig Drehwinkel für die Regelung einstellen, da durch den sinusförmigen Verlauf des elektrischen Signals jedem Drehwinkel ein Spannungswert zugeordnet ist.

Mit Hilfe des Referenzwinkelbereichs kann zusätzlich zum Drehwinkel auch die Drehrichtung erfaßt werden, falls an den Grenzen des Referenzwinkelbereichs zwei unterschiedlich große elektrische Signale am Magnetfeldsensor auftreten. Wird z.B. der Referenzwinkelbereich verlassen, wobei sich das Referenzsignal ändert, so ist je nach Größe des elektrischen Signals am Magnetfeldsensor eindeutig die jeweilige Grenze des Referenzwinkelbereiches festgelegt, die mit dem momentanen Drehwinkel übereinstimmt. Der Drehwinkel muß sich demzufolge innerhalb des Referenzwinkelbereiches in Richtung dieser Grenze verändert haben. Auf analoge Weise ergibt sich die Drehrichtung, wenn der Drehwinkel in den Referenzwinkelbereich eintritt.

Eine nächste Ausführungsform der Erfindung besteht darin, daß die Relativdrehung abhängig vom Drehwinkel eines einen Druck in einer Druckkammer einstellenden Drehventils erfolgt. Ein Drehventil als Bestandteil einer pneumatischen oder hydraulischen Regel- bzw. Steuerungseinheit stellt besondere Anforderungen an die mit ihm verbundenen Einrichtungen. Zu diesen Anforderungen gehört, daß eine Sensoreinrichtung, die den Drehwinkel des Drehventils erfaßt, nach einer Störung, wie z.B. Spannungsausfall, die letzte Stellung des Drehwinkels bei Spannungswiederkehr erfassen kann. Der Sensor nach der Erfindung erfüllt diese Anforderung, da sich je nach Drehwinkel bei Spannungswiederkehr ein analoges Signal am Magnetfeldsensor einstellt, das dem jeweiligen Drehwinkel entspricht. Eine weitere Anforderung ist, daß aus Sicherheitsgründen ein Durchdrehen des Drehventils möglich sein muß. Der Sensor nach der Erfindung arbeitet berührungslos und hat keine mechanische Begrenzung des Drehwinkels. Als Drehventil kann zweckmäßig ein Drehkolbenventil mit den oben erwähnten Eigenschaften verwendet werden.

Ein Ausführungsbeispiel der Erfindung besteht darin, daß die magnetische Anordnung einen sich um eine durch den Magnetfeldsensor verlaufende Drehachse drehenden Träger enthält, wobei an einem ersten Ende des Trägers ein erster Dauermagnet und an einem zweiten Ende des Trägers ein zweiter Dauermagnet mit gegensinniger in Richtung der Drehachse verlaufender Polanordnung befestigt sind. Durch das Anordnen der beiden Dauermagnete in Form eines Quadrupols ergibt sich ein stärkeres Magnetfeld im Vergleich zu einem einzigen, durch einen der Dauermagneten gebildeten Dipol. Das Magnetfeld, das den Magnetsensor durchsetzt, ist dabei annähernd linear. Haben die Dauermagneten zueinander einen gleichen Abstand von der Drehachse, so entsteht eine symmetrische Feldanordnung bezüglich des Magnetfeldsensors. Durch diese Maßnahmen nähert sich das elektrische Signal des Magnetfeldsensors einem exakten sinusförmigen Verlauf an. Das Magnetfeld wird noch verstärkt, wenn der Träger aus einem Material mit geringem magnetischem Widerstand, z.B. aus Eisen, besteht, so daß das Magnetfeld durch den Träger konzentriert wird.

Ein weiteres Ausführungsbeispiel der Erfindung besteht darin, daß der Referenzsensor ein vom ersten Dauermagneten geschalteter Hallschalter ist. Ein Hallschalter ist eine elektrische Einrichtung, die ein Hallelement und eine dessen Signal verarbeitende elektrische Schaltung enthält. Die Schaltung ist so ausgelegt, daß das Referenzsignal bei einem Drehwinkel an einer der Grenzen des Referenzwinkelbereiches eine steile Flanke hat. Die Grenzen des Referenzwinkelbereichs und damit auch der Referenzwinkelbereich selbst können aufgrund der steilen Flanken präzise erfaßt werden.

Eine Weiterbildung besteht darin, daß der Sensor einen weiteren Magnetfeldsensor enthält, der relativ zum ersten Magnetfeldsensor um etwa 45° gedreht angeordnet ist. Über einen Vollwinkelbereich von 360° hat zumindest eines der elektrischen Signale der beiden Magnetfeldsensoren in einem Winkelbereich von etwa 45° jeweils einen annähernd linearen Verlauf. Durch einen Vergleich der beiden elektrischen Signale kann innerhalb zweier Drehwinkelbereiche von jeweils 180° der Drehwinkel eindeutig bestimmt werden. Durch das Referenzsignal können die beiden 180°-Bereiche voneinander unterschieden werden, indem bei einem Suchlauf der Drehwinkel z.B. solange erhöht wird, bis das Referenzsignal einen für den Referenzwinkelbereich charakteristischen Wert hat. Vom Referenzwinkelbereich aus lassen sich dann, wie oben beschrieben, eindeutig die Drehwinkel erfassen und einstellen. Es ergibt sich somit ein berührungsloser analoger Drehwinkelsensor für einen Winkelbereich von 360° mit eindeutiger Drehwinkel- und Drehrichtungserkennung und ohne Drehbegrenzung.

Der Sensor kann bei einer Weiterbildung mehrere Referenzsensoren enthalten, deren Referenzwinkelbereiche aneinandergrenzen und einen Winkelbereich von 360° definiert überdecken. Durch diese Maßnahme ist der Suchlauf zu Beginn eines Regelvorganges nicht mehr notwendig. Durch die Referenzsensoren erfolgt eine Grobauflösung des Drehwinkels. Eine Feinauflösung erfolgt über das bzw. die elektrischen Signale des bzw. der Magnetfeldsensoren. Kommt es zu Störungen wie z.B. Stromausfall, so wird der letzte Drehwinkel bei erneuter Betriebsbereitschaft erfaßt. Der Drehwinkel ist dabei beliebig.

Insbesondere bei pneumatischen und hydraulischen Einrichtungen können Schäden beim erneuten Herstellen der Betriebsbereitschaft vermieden werden, wenn die Drehwinkel von Ventilen beim Herstellen der erneuten Betriebsbereitschaft sofort erfaßt werden und das Herstellen der Betriebsbereitschaft abhängig von diesen Drehwinkeln unterschiedlich erfolgt.

Im folgenden werden Ausführungsbeispiele der Erfindung anhand der Zeichnungen erläutert. Dabei zeigen:
- Figur 1: eine schematische Darstellung einer Einrichtung zum Durchführen des Verfahrens zum Regeln des Drucks in einer Druckkammer,
- Figur 2: einen ersten Drehwinkelsensor in Vorderansicht,
- Figur 3: den Drehwinkelsensor nach Figur 2 in Seitenansicht,
- Figur 4: die Spannungsverläufe des Ausgangssignals eines Magnetfeldsensors und des Referenzsignals eines Hallschalters des Drehwinkelsensors nach Figur 2 und den Unterdruckverlauf in der Druckkammer abhängig vom Drehwinkel,
- Figur 5: den Feldlinienverlauf des Magnetfeldes beim Drehwinkelsensor nach Figur 2,
- Figur 6: den Feldlinienverlauf des Magnetfeldes eines zweiten Ausführungsbeispiels eines Drehwinkelsensors,
- Figur 7: den Drehwinkelsensor nach Figur 6 in Vorderansicht,
- Figur 8: ein drittes Ausführungsbeispiel eines Drehwinkelsensors in Vorderansicht, und
- Figur 9: die Spannungsverläufe der Ausgangssignale von Magnetfeldsensoren und eines Hallschalters des Drehwinkelsensors nach Figur 8, abhängig vom Drehwinkel.

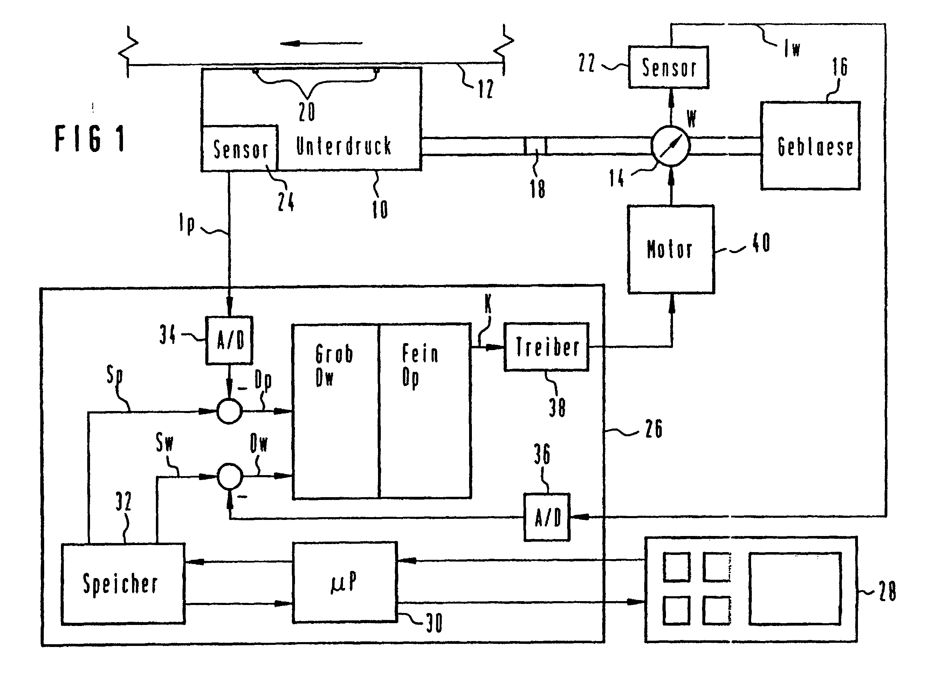

Figur 1 zeigt eine schematische Darstellung einer Einrichtung zum Durchführen des Verfahrens zum Regeln des Drucks in einer Druckkammer 10. Die Druckkammer 10 ist Bestandteil einer pneumatischen Bremsvorrichtung zum Bremsen eines bahnförmigen Aufzeichnungsträgers 12. Der Aufzeichnungsträger 12 besteht aus Endlospapier, auf das in einem Drucker ein Druckbild aufgedruckt wird. Die Druckkammer 10 ist über ein Drehkolbenventil 14 mit einem Gebläse 16 verbunden, so daß sich in der Druckkammer 10 abhängig vom Drehwinkel W des Kolbens im Drehkolbenventil 14 ein zugehöriger Unterdruck einstellt. Zwischen Druckkammer 10 und Drehkolbenventil 14 befindet sich ein Filter 18, das Staub vom Drehkolbenventil 14 und vom Gebläse 16 fernhält.

Durch den Unterdruck in der Druckkammer 10 wird der Aufzeichnungsträger 12 über Saugkanäle 20 angesaugt. Eine durch einen Pfeil in Figur 1 angedeutete Transportbewegung des Aufzeichnungsträgers 12 wird durch die beim Ansaugen erhöhte Reibungskraft zwischen Aufzeichnungsträger 12 und Oberfläche der Druckkammer 10 abgebremst.

Der Drehwinkel W des Kolbens des Drehkolbenventils 14 wird mit Hilfe eines Drehwinkelsensors 22 als Ist-Drehwinkel Iw erfaßt. Der Unterdruck in der Druckkammer 10 wird durch einen Drucksensor 24 als Ist-Druck Ip erfaßt. Ist-Drehwinkel Iw und Ist-Druck Ip sind Regelgrößen, die einer Steuereinheit 26 zugeführt werden.

Die Steuereinheit 26 gibt einen bestimmten Soll-Druck Sp z.B. abhängig vom Gewicht des Aufzeichnungsträgers 12 und dessen Materialart sowie von Betriebsparametern vor. Die erwähnten Eigenschaften des Aufzeichnungsträgers 12 können wahlweise durch nicht dargestellte Sensoren erfaßt oder manuell mit Hilfe eines mit der Steuereinheit 26 verbundenen Ein/Ausgabegerätes 28 oder über ein Barcodelesegerät (nicht dargestellt) eingegeben werden. Zu den Betriebsparametern, die durch Sensoren erfaßt werden, zählen z.B. die Druckgeschwindigkeit und die Temperatur bei einem Fixiervorgang. Der Soll-Druck Sp bestimmt wesentlich die Bremswirkung der Bremsvorrichtung, da je nach vorhandenem Unterdruck in der Druckkammer 10 der Aufzeichnungsträger 12 durch die Saugkanäle 20 unterschiedlich stark angesaugt und damit unterschiedlich stark gebremst wird.

Ein in der Steuereinheit 26 enthaltener Mikroprozessor 30 arbeitet ein in einem Speicher 32 abgespeichertes Steuerungsprogramm ab. Dem Speicher 32 entnimmt die Steuerung 26 auch den sich aus dem Gewicht des Aufzeichnungsträgers 12, dessen Materialart sowie aus der Druckgeschwindigkeit ergebenden Soll-Druck Sp. Zu jedem möglichen Soll-Druck Sp ist im Speicher 32 weiterhin ein zugehöriger Soll-Drehwinkel Sw abgespeichert. Stellt die Steuereinheit 26 den Soll-Drehwinkel Sw am Drehkolbenventil 14 ein, so stellt sich nach einiger Zeit in der Druckkammer 10 annähernd ein Druck ein, der dem Soll-Druck Sp entspricht. Der Zusammenhang zwischen Soll-Druck Sp und Soll-Drehwinkel Sw ist durch eine statische Kennlinie zwischen Ist-Drehwinkel Iw und Ist-Druck Ip gegeben.

Diese statische Kennlinie wird vor einer ersten Inbetriebnahme aufgenommen, indem bestimmte Ist-Drehwinkel Iw am Drehkolbenventil 14 eingestellt werden und der sich einstellende stabile Ist-Druck Ip in der Druckkammer 10 gemessen wird. Durch diese Maßnahme wird erreicht, daß das träge dynamische Verhalten des Drucks in der Druckkammer 10 die Regelgeschwindigkeit nicht verschlechtert. Die Regeleinheit 26 stellt den einem bestimmten Soll-Druck Sp zugeordneten Soll-Drehwinkel Sw mit Hilfe eines Gleichstrommotors 40 ein und wartet, bis sich ein stabiler Druck in der Druckkammer 10 aufgebaut hat. Weiterhin weicht dieser Ist-Druck Ip nur noch wenig vom Soll-Druck Sp ab, da beim Aufnehmen der statischen Kennlinie Toleranzen des Gleichstrommotors 40 und des Drehkolbenventils 16 in der Kennlinie berücksichtigt sind. Diese Toleranzen führen nicht zu Druckabweichungen Dp, womit der Soll-Druck Sp schnell eingeregelt werden kann.

Weiterhin enthält die Steuereinheit 26 zwei Analog-Digitalwandler 34 und 36. Der Analog-Digitalwandler 34 bzw. 36 wandelt den analogen Ist-Druck Ip bzw. den analogen Ist-Drehwinkel Iw in eine digitale Größe um.

Die Steuereinheit 26 bestimmt eine Druckabweichung Dp aus der Differenz des Soll-Drucks Sp und des Ist-Drucks Ip. Eine Drehwinkelabweichung Dw wird aus der Differenz zwischen Soll-Drehwinkel Sw und Ist-Drehwinkel Iw bestimmt. Abhängig von der Druckabweichung Dw bestimmt die Steuereinheit 26 zunächst eine Korrekturgröße K und führt eine Grobregelung des Unterdrucks in der Druckkammer 10 durch. Die Korrekturgröße K wird mit Hilfe eines Leistungstreibers 38 in analoge Spannungsimpulse umgewandelt. Diese Spannungsimpulse steuern den Gleichstrommotor 40 an, dessen Rotor drehfest mit dem Kolben des Drehkolbenventils 14 verbunden ist. Die Korrekturgröße K ist so bemessen, daß sich die Drehwinkelabweichung Dw verringert und schließlich ganz zu Null wird. Anschließend wartet die Regeleinheit 26 darauf, daß sich ein annähernd stabiler Ist-Druck Ip in der Druckkammer 10 einstellt. Abhängig von einer gegebenenfalls verbleibenden Druckabweichung Dp führt die Steuereinheit 26 eine Feinregelung durch, indem die Korrekturgröße K nunmehr so bemessen wird, daß sich die Druckabweichung Dp verringert und schließlich ganz verschwindet. Der Soll-Druck Sp entspricht dann dem Ist-Druck Ip. Eine Ursache für die verbleibende Druckabweichung Dp ist z.B. das sich beim Betrieb der Druckkammer 10 verstopfende Staubfilter 18, und die damit verbundene Veränderung der statischen Kennlinie zwischen Ist-Drehwinkel Iw und Ist-Druck Ip.

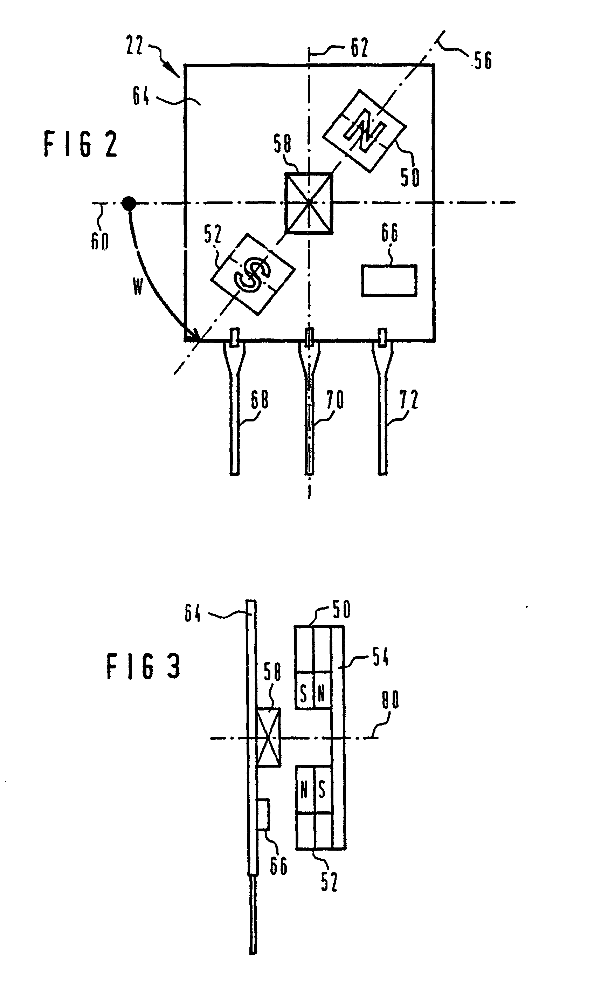

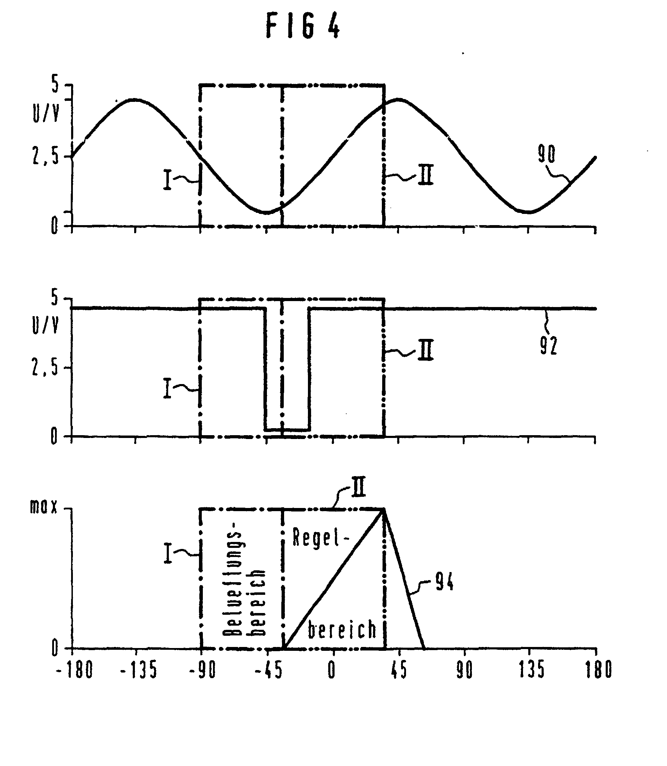

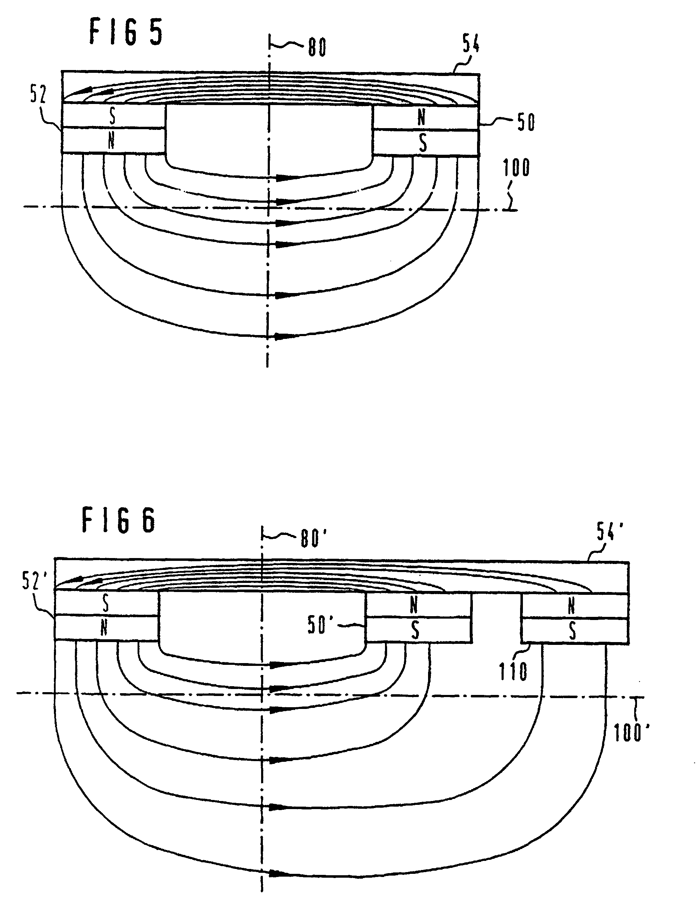

Die Figuren 2 und 3 zeigen ein erstes Ausführungsbeispiel des Drehwinkelsensors 22 in Vorderansicht und Seitenansicht. Zwei Dauermagneten 50 und 52 sind an einem aus Gründen der besseren Übersichtlichkeit in Figur 2 nicht dargestellten Träger 54 befestigt. Der Dauermagnet 50 ist an einem ersten Ende des Trägers 54 mit einer seinen Nordpol definierenden Fläche befestigt. Am anderen Ende des Trägers 54 ist der Dauermagnet 52 mit seiner den Südpol definierenden Fläche befestigt. Der Träger 54 ist mit dem Kolben des Drehkolbenventils 14 drehfest verbunden, so daß sich je nach Stellung des Kolbens ein Drehwinkel W zwischen einer Längsachse 56 des Trägers 54 und dem Magnetfeldsensor 58 bzw. dessen zur Längsachse 62 senkrecht stehende Querachse 60 in der in Figur 2 gezeigten Weise einstellt. Der Abstand der Dauermagneten 50 und 52 zum Magnetfeldsensor 58 ist so gewählt, daß das Magnetfeld zwischen den Dauermagneten 50 und 52 den Magnetfeldsensor 58 maximal durchsetzt. Abhängig vom Drehwinkel W ergibt sich an den Ausgängen des Magnetfeldsensors ein anhand der Figur 4 erläuterter Spannungsverlauf. Der Feldlinienverlauf der Dauermagnete 50, 52 ist in der Figur 5 näher dargestellt.

Der Magnetfeldsensor 58 ist auf einer Grundplatte 64 befestigt. Auf der Grundplatte 64 befindet sich weiterhin ein Hallschalter 66, der durch das magnetische Feld am Südpol S des Dauermagneten 50 geschaltet wird und ein von einer enthaltenen Schaltung erzeugtes Referenzsignal abgibt, dessen Spannungsverlauf ebenfalls anhand der Figur 4 später noch erläutert wird.

An der Grundplatte 64 sind Anschlußstifte 68, 70 und 72 befestigt, an denen der Spannungsverlauf des Magnetfeldsensors 58 abgegriffen werden kann. Anschlüsse für den Hallschalter 66 sind nicht dargestellt.

In Figur 3 ist die räumliche Anordnung der Grundplatte 64 und des Trägers 54 mit den beiden Dauermagneten 50 und 52 zu erkennen. Der Träger 54 dreht sich um eine Drehachse 80, die mittig durch den Magnetfeldsensor 58 verläuft.

Figur 4 zeigt die Spannungsverläufe des Ausgangssignals am Magnetfeldsensor 58 und des Referenzsignals am Hallschalter 66 sowie den Unterdruckverlauf in der Druckkammer 10 abhängig vom auf der Abszissenachse abgetragenen Drehwinkel W in einem Bereich von -180° bis + 180°.

Der Spannungsverlauf des Ausgangssignals des Magnetfeldsensors 58 abhängig vom Drehwinkel W ist in einem oberen Teil der Figur 4 dargestellt. Auf der Ordinatenachse ist die Spannung in Volt in einem Bereich von 0 Volt bis 5 Volt abgetragen. Der Spannungsverlauf stimmt mit einer in Richtung der Ordinatenachse um 2,5 Volt verschobenen Sinuskurve 90 überein. Die Amplitude der Sinuskurve liegt zwischen ca. 0 Volt und ca. 5 Volt. Die Bedeutung eines dunkelgrau und eines hellgrau unterlegten Winkelbereiches I bzw. II wird anhand der Figur 4 erläutert.

Figur 4 zeigt in ihrem mittleren Teil den Spannungsverlauf 92 des Referenzsignals des Hallschalters 66. Auf der Ordinatenachse ist wiederum die Spannung in Volt in einem Bereich von 0 Volt bis 5 Volt abgetragen. Ein Referenzwinkelbereich liegt etwa zwischen - 45° und - 20° bezüglich des Drehwinkels W = 0° beim Spannungswert von 2,5 V der Sinuskurve 90 des Ausgangssignals des Magnetfeldsensors 58. Ein Bereich von etwa 25° läßt sich mit Hilfe eines einzigen Hallschalters 66 erfassen. Bei - 45° befindet sich ein Minimum der Sinuskurve 90. Mit Hilfe des Hallschalters 66 lassen sich der fallende und der steigende Teil der Sinuskurve 90 in der Umgebung von - 45° voneinander unterscheiden. Befindet sich der Drehwinkel W zwischen - 45° und - 20°, so tritt zusätzlich zum elektrischen Signal des Magnetfeldsensors 58 ein durch eine Spannung nahe Null gekennzeichnetes Referenzsignal auf. In dem Referenzwinkelbereich von - 45° bis - 20° gibt der Hallschalter 66 eine Spannung annähernd Null ab. In diesem Bereich befindet sich der Südpol S des Dauermagneten 50 direkt oberhalb des Hallschalters 66. Die elektrische Schaltung im Hallschalter 66 bewirkt, daß die Grenzen des Referenzwinkelbereiches relativ scharf verlaufen. Außerhalb des Referenzwinkelbereiches liegt eine Spannung von fast 5 Volt am Hallschalter an.

Figur 4 zeigt in ihrem unteren Teil den Unterdruckverlauf 94 in der Druckkammer 10 abhängig vom Drehwinkel W bzw. vom Ist-Drehwinkel Iw. Die Ordinatenachse erstreckt sich von einem Unterdruck gleich Null bis zu einem Maximalunterdruck max. Das Drehkolbenventil 14 ist so aufgebaut, daß es einen in der Figur 4 dunkelgrau unterlegten Belüftungsbereich I und einen in der Figur 4 hellgrau unterlegten Regelbereich II hat. Im Belüftungsbereich I ist ein schnelles Entlüften der Druckkammer 10, z.B. bei Störungen im Druckbetrieb möglich, da eine direkte Verbindung von der Druckkammer 10 zur Außenluft durch das Drehkolbenventil 14 hergestellt wird. Im Regelbereich II hängt der sich in der Druckkammer 10 einstellende Unterdruck linear vom Ist-Drehwinkel Iw des Drehkolbenventils 14 ab. Der Kolben des Drehkolbenventils 14 ist so mit dem Träger 54 verbunden, daß der Belüftungsbereich I zwischen -90° und -35° und der sich daran anschließende Regelbereich II zwischen -35° und +35° liegt. Dadurch wird erreicht, daß, wie in der Figur 4 zu erkennen ist, der Regelbereich in einem annähernd linearen Teil der Sinuskurve 90 liegt, wie anhand der übereinstimmenden hellgrau schraffierten Bereiche II in der Figur 4 zu erkennen ist. Mit zunehmendem Drehwinkel W innerhalb des Regelbereiches II steigen der Unterdruck in der Druckkammer 10 und gleichzeitig das Ausgangssignal am Magnetfeldsensor 58 linear an. Somit läßt sich eine lineare Regelung des Unterdrucks mit stabilem Regelverhalten und zuverlässigem Regelergebnis durchführen.

Bei Inbetriebnahme der Steuereinheit 26 steuert diese den Gleichstrommotor 40 in einem Suchlauf so an, daß sich der Drehwinkel W am Drehkolbenventil 14 vergrößert. Dadurch verändert sich der erfaßte Ist-Drehwinkel Iw. Die Steuereinheit 26 steuert den Gleichstrommotor 40 solange an, bis nahezu keine Spannung vom Hallschalter 66 abgegeben wird und somit der Ist-Drehwinkel Iw im Referenzwinkelbereich liegt. Die Spannung am Magnetfeldsensor 58 ist jetzt ein eindeutiges Maß für den Ist-Drehwinkel Iw. Damit kann die Steuereinheit 26 mit der oben beschriebenen Regelung des Unterdrucks in der Druckkammer 10 auf den Soll-Druck Sp beginnen.

Figur 5 zeigt den Feldlinienverlauf des Magnetfeldes zwischen den Dauermagneten 50 und 52 beim Drehwinkelsensor 22. Die Feldlinien werden im Träger 54, der aus Eisen besteht, aufgrund des geringen magnetischen Widerstandes des Eisens konzentriert. Der Verlauf der Feldlinien im Bereich des Schnittpunktes der Drehachse 80 und einer Ebene 100 ist annähernd parallel und die Feldlinien haben einen etwa gleich großen Abstand voneinander, so daß ein annähernd lineares Magnetfeld den im Schnittpunkt der Drehachse 80 und der Ebene 100 angeordneten Magnetfeldsensor 58 (Figuren 2 und 3) durchsetzt.

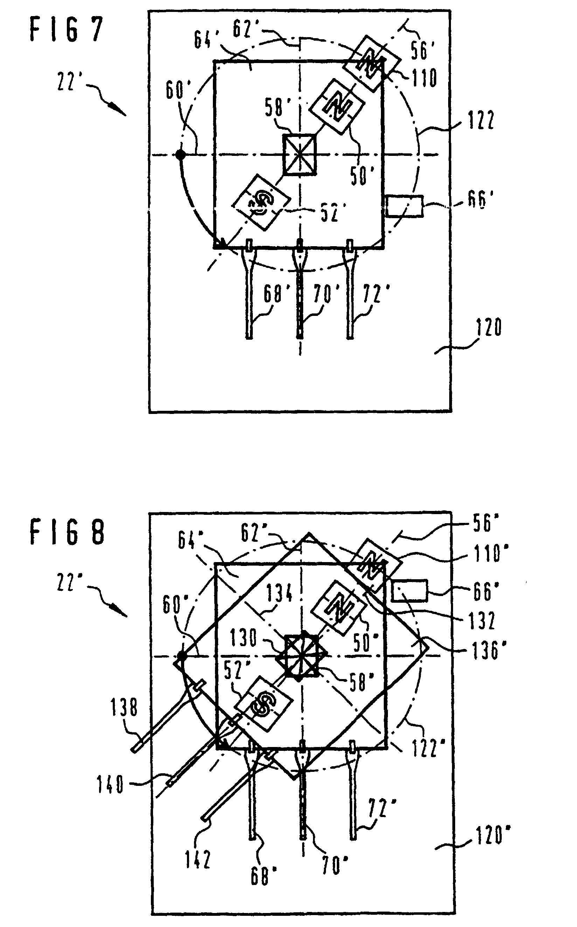

Figur 6 zeigt den Feldlinienverlauf des Magnetfeldes eines anstelle des Drehwinkelsensors 22 nach dem ersten Ausführungsbeispiel einsetzbaren zweiten Drehwinkelsensors 22', dessen Aufbau anhand der Figur 7 erläutert wird. Die beiden Drehwinkelsensoren 22 und 22' sind im wesentlichen gleich aufgebaut, so daß jeweils gleiche Bestandteile mit übereinstimmenden gestrichenen Bezugszeichen nicht noch einmal erläutert werden. Der Drehwinkelsensor 22' unterscheidet sich vom Drehwinkelsensor 22 dadurch, daß der Hallschalter 66' (Figur 7) außerhalb der Grundplatte 64' in einem großen Abstand vom Magnetfeldsensor 58' angeordnet ist. Der Träger 54' ist in Richtung des ersten Dauermagneten 50° verlängert. An dem verlängerten ersten Ende ist ein weiterer Dauermagnet 110 mit seiner den Nordpol definierenden Fläche befestigt. Der Dauermagnet 100 schaltet den sich außerhalb der Grundplatte 64' befindenden Hallschalter 66' mit seinem am Südpol S austretenden Magnetfeld. Wie in den Figuren 5 und 6 zu erkennen ist, verändert sich das Magnetfeld in der Umgebung des im Schnittpunkt der Drehachse 80' und der Ebene 100' angebrachten Magnetfeldsensors 58' (Figur 7) nur unwesentlich. Damit gelten die in der Figur 4 gezeigten Verläufe über den Drehwinkel W auch für den Drehwinkelsensor 22'.

Figur 7 zeigt den Drehwinkelsensor 22' in Vorderansicht, dessen Grundplatte 64' auf einer Platte 120 angeordnet ist. Auf dieser Platte 120 befindet sich der Hallschalter 66' auf einem Drehkreis 122, der durch die Bewegungslinie des Dauermagneten 110 bei der Drehung des Trägers 54' definiert ist. Der Hallschalter 66' ist so auf dem Drehkreis 122 angeordnet, daß der Spannungsverlauf nach dem mittleren Teil der Figur 4 auch für den Hallschalter 66' zutrifft.

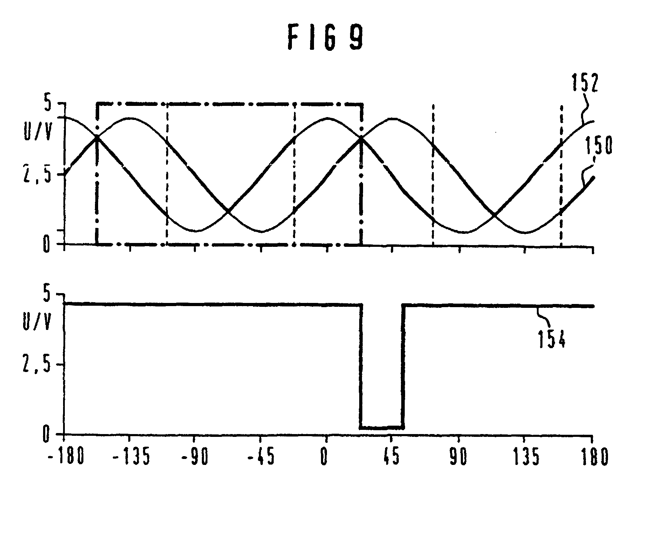

Figur 8 zeigt einen Drehwinkelsensor 22" als drittes Ausführungsbeispiel. Die Drehwinkelsensoren 22' und 22" sind im wesentlichen gleichartig aufgebaut, so daß wiederum gleiche Bestandteile mit doppelt gestrichenen Bezugszeichen in Figur 8 nicht noch einmal erläutert werden. Im Wirkungsbereich des Magnetfeldes der Dauermagneten 50" und 52" ist ein weiterer Magnetfeldsensor 130 so angeordnet, daß er relativ zum Magnetfeldsensor 58" um - 45° gedreht ist. Eine Längsachse 132 sowie eine Querachse 134 durch den Magnetfeldsensor 130 sind gemäß Figur 8 festgelegt. Der Magnetfeldsensor 130 ist auf einer weiteren Grundplatte 136 angeordnet. Mit der Grundplatte 136 sind Anschlußstifte 138, 140 und 142 verbunden, über die der Spannungsverlauf am Magnetfeldsensor 130 abgegriffen wird. Der Hallschalter 66" hat aufgrund einer anderen Lage auf dem Drehkreis 122" einen anderen anhand der Figur 9 dargestellten Referenzwinkelbereich als die Hallschalter 66 und 66'.

Figur 9 zeigt die Spannungsverläufe der Ausgangssignale der Magnetfeldsensoren 58" und 130 und des Hallschalters 66" abhängig vom auf der Abszissenachse abgetragenen Drehwinkel W in einem Bereich von - 180° bis + 180°. Auf den Ordinatenachsen ist jeweils die Spannung in einem Bereich von 0 Volt bis 5 Volt abgetragen.

In ihrem oberen Teil zeigt Figur 9 Spannungsverläufe an den Magnetfeldsensoren 58" und 130. Der Spannungsverlauf am Magnetfeldsensor 58" ist wiederum eine um 2,5 V in Richtung der Ordinatenachse verschobene Sinuskurve 150. Der Spannungsverlauf am Magnetfeldsensor 130 ist eine um 2,5 V in Richtung der Ordinatenachse verschobene Kosinuskurve 152, die bezüglich der Sinuskurve 150 um - 45° verschoben ist. Die annähernd linearen Bereiche der Sinuskurve 150 und der Kosinuskurve 152 sind in der Figur 2 fett hervorgehoben. Der gesamte Winkelbereich des Drehwinkelsensors 22" von - 180° bis + 180° ist durch die linearen Bereiche lückenlos überdeckt. In ihrem unteren Teil zeigt die Figur 9 den Spannungsverlauf 154 des Referenzsignals am Hallschalter 66" des Drehwinkelsensors 22". Der Referenzwinkelbereich liegt etwa zwischen + 25° und + 50°.

Wird der Drehwinkelsensor 22" anstelle des Drehwinkelsensors 22 eingesetzt, so kann der gesamte Drehwinkel W des Drehkolbenventils 14 durch die Steuereinheit 26 als Ist-Drehwinkel Iw eindeutig erfaßt werden, wobei Drehwinkel W und Spannung am jeweiligen Magnetfeldsensor 58" bzw. 130 in acht Winkelbereichen von jeweils 45° etwa linear voneinander abhängen. Die Steuereinheit 26 verwendet zum Erfassen des Ist-Drehwinkels Iw jeweils die Spannung der Magnetfeldsensoren 58" und 130, die sich gerade in einem der linearen Bereiche befindet. Diese Spannung wird mit zwei Schwellwertschaltern (nicht dargestellt) eindeutig bestimmt, da sich nur jeweils eine der Spannungen der Magnetfeldsensoren 58" und 130 in einem der linearen Bereiche befindet und die andere Spannung unterhalb eines ersten Schwellwertes bzw. oberhalb eines zweiten Schwellwertes liegt.

Durch Größenvergleich der Spannung in dem linearen Bereich mit der Spannung außerhalb desselben erfaßt die Steuereinheit 26 einen Winkelbereich von 180° eindeutig, da sich jeweils zwei der linearen Bereiche der Spannung an einem der Magnetfeldsensoren 58" bzw. 130 darin unterscheiden, daß die Spannung am anderen Magnetfeldsensor 130 bzw. 58" größer bzw. kleiner ist. Durch Einbeziehen des Referenzwinkelbereiches kann die Steuereinheit 26 den eindeutigen Winkelbereich weiter vergrößern.

## Patentansprüche

1. Einrichtung zum Regeln des Drucks in der Druckkammer (10) einer pneumatischen Bremsvorrichtung für einen Aufzeichnungsträger (12) innerhalb eines Aufzeichnungsgerätes, mit einem Drehventil (14) zum Einstellen eines Ist-Drucks (Ip) in der Druckkammer (10) abhängig von einem Ist-Drehwinkel (Iw),
mit einem Sensor (22, 22', 22") zum Erfassen des Ist-Drehwinkels (Iw),
mit einem Drucksensor (24) zum Erfassen des Ist-Drucks (Ip) und
mit einer Steuerung (26) zur Vorgabe eines Soll-Druckes (Sp) und einem zugehörigen Soll-Drehwinkel (Sw) abhängig von Eigenschaften des Aufzeichnungsträgers (12) und/oder von Betriebsparametern bei der Aufzeichnung,
wobei die Steuerung (26) eine Druckabweichung (Dp) zwischen Ist-Druck (Ip) und Soll-Druck (Sp) sowie eine Drehwinkelbweichung (Dw) zwischen Ist-Drehwinkel (Iw) und Soll-Drehwinkel (Sw) des Drehventils (14) bestimmt und
wobei die Steuerung (26) eine Stelleinrichtung (40) zum Einstellen des Ventil-Drehwinkels (W) abhängig von der Druckabweichung (Dp) ansteuert, wobei der Sensor (22, 22', 22") zum Erfassen des Drehwinkels eine magnetische Anordnung zum Erzeugen eines Magnetfeldes und einen Magnetfeldsensor (58, 58', 58") zum Erzeugen eines elektrischen Signals umfaßt, **dadurch gekennzeichnet, daß** die Steuerung (26) die Stelleinrichtung auch abhängig von der Drehwinkelabweichung (Dw) ansteuert, wobei das Drehventil (14) in einem ersten Winkelbereich (I) einen Druckausgleich zwischen einem Umgebungsdruck und dem Druck in der Druckkammer (10) gestattet, und in einem an den ersten Winkelbereich (I) angrenzenden zweiten Winkelbereich (II) mit zunehmendem Drehwinkel einen Druck in der Druckkammer (10) einstellt, und wobei der Sensor (22, 22', 22") einen magnetischen Referenzsensor (66, 66', 66") umfaßt, der ein Referenzsignal beim Einwirken des Magnetfeldes in einem vorbestimmten Referenzwinkelbereich derart erzeugt, daß vom Referenzwinkelbereich ausgehend geeignete Drehwinkel zur Regelung des Drucks einstellbar sind, wobei beim Verstellen des Drehwinkels (W) eine Relativdrehung zwischen Magnetfeld und Magnetfeldsensor (58, 58', 58") erfolgt und wobei die Stelleinrichtung (40) den Drehwinkel am Drehventil (14) zunächst abhängig von der Drehwinkelabweichung (Dw) und dann abhängig von der Druckabweichung (Dp) einstellt.

2. Einrichtung nach Anspruch 1, **dadurch gekennzeichnet, daß** der einem bestimmten Soll-Druck (Sp) zugeordnete Soll-Drehwinkel (Sw) mit Hilfe einer statischen Kennlinie des Ist-Drucks (Ip) in Abhängigkeit vom Ist-Drehwinkel (Iw) bestimmt wird.

3. Einrichtung nach Anspruch 1 oder 2, **dadurch gekennzeichnet, daß** zunächst eine Grobeinstellung des Drucks in der Druckkammer (10) durch Einregeln des dem Soll-Druck (Sp) zugeordneten Soll-Drehwinkels (Sw) abhängig von der Drehwinkelabweichung (Dw) und danach eine Feinregelung auf der Grundlage der Druckabweichung (Dp) erfolgt.

4. Einrichtung nach einem der Ansprüche 1 bis 3, **dadurch gekennzeichnet, daß** das Drehventil (14) ein Drehkolbenventil (14) ist und daß im zweiten Winkelbereich (II) mit zunehmendem Drehwinkel ein zumindest annähernd linear verlaufender Druck in der Druckakmmer eingestellt wird.

5. Einrichtung nach einem der Ansprüche 1 bis 4, **dadurch gekennzeichnet, daß** der Referenzwinkelbereich etwa zwischen - 45° und - 20° bezüglich des Winkels 0° bei Nulldurchgang des elektrischen Signals (90, 150) des Magnetfeldsensors (58, 58', 58") liegt.

6. Einrichtung nach einem der Ansprüche 1 bis 5, **dadurch gekennzeichnet, daß** das Drehventil ein Drehkolbenventil (14) ist, das in einem ersten Winkelbereich (I) einen Druckausgleich zwischen einem Umgebungsdruck und dem Druck in der Druckkammer (10) gestattet, und daß das Drehkolbenventil (14) in einem an den ersten Winkelbereich (I) angrenzenden zweiten Winkelbereich (II) mit zunehmendem Drehwinkel einen kontinuierlich zunehmenden oder abnehmenden, vorzugsweise zumindest annähernd linear verlaufenden Druck in der Druckkammer (10) einstellt.

7. Einrichtung nach Patentanspruch 6, **dadurch gekennzeichnet, daß** der zweite Winkelbereich (II) etwa zwischen - 35° und 35° bezüglich des Winkels 0° bei Nulldurchgang des elektrischen Signals (90, 150) des Magnetfeldsensors (58, 58') liegt.

8. Einrichtung nach einem der Patentansprüche 1 bis 7, **dadurch gekennzeichnet, daß** die magnetische Anordnung einen sich um eine durch den Magnetfeldsensor verlaufende Drehachse (80) drehenden Träger (54, 54') enthält, wobei an einem ersten Ende des Trägers (54, 54', 54") ein erster Dauermagnet (50, 50', 50") und an einem zweiten Ende des Trägers (54, 54', 54") ein zweiter Dauermagnet (52, 52', 52") mit gegensinniger in Richtung der Drehachse (80, 80') verlaufender Polanordnung (N, S) befestigt sind.

9. Einrichtung nach Anspruch 8, **dadurch gekennzeichnet, daß** die Dauermagneten (50, 50', 50"; 52, 52', 52") einen zumindest annähernd gleichen Abstand von der Drehachse (80, 80') haben.

10. Einrichtung nach Anspruch 8 oder 9, **dadurch gekennzeichnet, daß** der Träger (54, 54', 54") aus einem Material mit geringem magnetischem Widerstand, vorzugsweise aus Eisen, besteht.

11. Einrichtung nach einem der Ansprüche 1 bis 10, **dadurch gekennzeichnet, daß** der Referenzsensor (66, 66', 66") ein vom ersten Dauermagneten (50, 50', 50") geschalteter Hallschalter ist.

12. Einrichtung nach einem der Ansprüche 1 bis 11, **dadurch gekennzeichnet, daß** am ersten Ende des Trägers (54, 54', 54") ein in Richtung der Drehachse (80') ausgerichteter weiterer Dauermagnet (110, 110') mit dem ersten Dauermagneten (50', 50") entsprechender Polanordnung und mit einem größeren Abstand von der Drehachse (80') angeordnet ist, wobei der magnetische Referenzsensor (66', 66") zumindest annähernd den größeren Abstand von der Drehachse (80') hat.

13. Einrichtung nach einem der Ansprüche 1 bis 12, **gekennzeichnet durch** einen weiteren Magnetfeldsensor (130), der relativ zum ersten Magnetfeldsensor (58") um etwa - 45° gedreht angeordnet ist.

14. Einrichtung nach einem der Ansprüche 1 bis 13, **gekennzeichnet durch** Referenzsensoren, deren Referenzwinkelbereiche aneinandergrenzen und einen Winkelbereich von 360° definiert überdecken.

15. Sensoranordnung zum Erfassen des Drehwinkels (W) eines Drehventils (14) umfassend: einen Magnetfeldsensor (58, 58', 58") zum Erzeugen eines elektrischen Signals mit zumindest annähernd sinusförmigem Verlauf (90, 150) abhängig von der Richtung eines den Magnetfeldsensor (58, 58', 58") durchsetzenden Magnetfeldes und eine magnetische Anordnung zum Erzeugen des Magnetfeldes,
wobei beim Verstellen des Drehwinkels (W) einer Relativdrehung zwischen Magnetfeld und Magnetfeldsensor erfolgt, **dadurch gekennzeichnet, daß** mit der Sensoranordnung der Druck in einer Druckkammer (10) geregelt wird, wobei das Drehventil in einem ersten Winkelbereich (I) einen Druckausgleich zwischen einem Umgebungsdruck und dem Druck in der Druckkammer (10) gestattet, und wobei das Drehventil (14) in einem an den ersten Winkelbereich (I) angrenzenden zweiten Winkelbereich (II) mit zunehmendem Drehwinkel einen kontinuierlich zunehmenden oder abnehmenden Druck in der Druckkammer (10) einstellt und wobei die Sensoranordnung einen magnetischen Referenzsensor (66, 66', 66") umfaßt, der ein Referenzsignal beim Einwirken des Magnetfeldes in einem vorbestimmten Referenzwinkelbereich derart erzeugt, daß vom Referenzwinkel ausgehend geeignete Drehwinkel zur Regelung des Drucks einstellbar sind.

16. Sensor nach Anspruch 15, **dadurch gekennzeichnet, daß** der Referenzwinkelbereich etwa zwischen - 45° und - 20° bezüglich des Winkels 0° bei Nulldurchgang des elektrischen Signals (90, 150) des Magnetfeldsensors (58, 58', 58") liegt.

17. Sensor nach Anspruch 15 oder 16, **dadurch gekennzeichnet, daß** die Relativdrehung abhängig vom Drehwinkel (W) eines einen Druck in einer Druckkammer (10) einstellenden Drehventils erfolgt.

18. Sensor nach einem der Ansprüche 15 bis 17, **dadurch gekennzeichnet, daß** das Drehventil ein Drehkolbenventil (14) ist, und daß es im zweiten Winkelbereich (II) den Druck in der Druckkammer (10) zumindest annähernd linear mit dem Drehwinkel einstellt.

19. Sensor nach Patentanspruch 18, **dadurch gekennzeichnet, daß** der zweite Winkelbereich (II) etwa zwischen - 35° und 35° bezüglich des Winkels 0° bei Nulldurchgang des elektrischen Signals (90, 150) des Magnetfeldsensors (58, 58') liegt.

20. Sensor nach einem der Patentansprüche 15 bis 19, **dadurch gekennzeichnet, daß** die magnetische Anordnung einen sich um eine durch den Magnetfeldsensor verlaufende Drehachse (80) drehenden Träger (54, 54') enthält, wobei an einem ersten Ende des Trägers (54, 54', 54") ein erster Dauermagnet (50, 50', 50") und an einem zweiten Ende des Trägers (54, 54', 54") ein zweiter Dauermagnet (52, 52', 52") mit gegensinniger in Richtung der Drehachse (80, 80') verlaufender Polanordnung (N, S) befestigt sind.

21. Sensor nach Anspruch 20, **dadurch gekennzeichnet, daß** die Dauermagneten (50, 50', 50"; 52, 52', 52") einen zumindest annähernd gleichen Abstand von der Drehachse (80, 80') haben.

22. Sensor nach Anspruch 20 oder 21, **dadurch gekennzeichnet, daß** der Träger (54, 54', 54") aus einem Material mit geringem magnetischem Widerstand, vorzugsweise aus Eisen, besteht.

23. Sensor nach einem der Ansprüche 15 bis 22, **dadurch gekennzeichnet, daß** der Referenzsensor (66, 66', 66") ein vom ersten Dauermagneten (50, 50', 50") geschalteter Hallschalter ist.

24. Sensor nach einem der Ansprüche 20 bis 23, **dadurch gekennzeichnet, daß** am ersten Ende des Trägers (54, 54', 54") ein in Richtung der Drehachse (80') ausgerichteter weiterer Dauermagnet (110, 110') mit dem ersten Dauermagneten (50', 50") entsprechender Polanordnung und mit einem größeren Abstand von der Drehachse (80') angeordnet ist, wobei der magnetische Referenzsensor (66', 66") zumindest annähernd den größeren Abstand von der Drehachse (80') hat.

25. Sensor nach einem der Ansprüche 15 bis 24, **gekennzeichnet durch** einen weiteren Magnetfeldsensor (130), der relativ zum ersten Magnetfeldsensor (58") um etwa - 45° gedreht angeordnet ist.

26. Sensor nach einem der Ansprüche 15 bis 26, **gekennzeichnet durch** Referenzsensoren, deren Referenzwinkelbereiche aneinandergrenzen und einen Winkelbereich von 360° definiert überdecken.

## Claims

1. Apparatus for controlling the pressure in a pressure chamber (10) of a pneumatic braking device for a recording medium (12) within a recording device,
having a rotary valve (14) for setting an actual pressure (Ip) in the pressure chamber (10) depending on an actual angle of rotation (Iw),
having a sensor (22, 22', 22") for acquiring the actual angle of rotation (Iw),
having a pressure sensor (24) for acquiring the actual pressure (Ip) and
having a controller (26) for predetermining a desired pressure (Sp) and an appertaining desired angle of rotation (Sw) depending on characteristics of the recording medium (12) and/or on operating parameters during recording,
wherein the controller (26) determines a pressure deviation (Dp) between the actual pressure (Ip) and the desired pressure (Sp), as well as a deviation in the angle of rotation (Dw) between the actual angle of rotation (Iw) and the desired angle of rotation (Sw) of the rotary valve (14) and
wherein the controller (26) drives a setting means (40) for setting the valve angle of rotation (W) depending on the pressure deviation (Dp),
wherein the sensor (22, 22', 22") for acquiring the angle of rotation comprises a magnetic arrangement for generating a magnetic field and a magnetic field sensor (58, 58', 58") for generating an electric signal,
**characterized in that** the controller (26) also drives the setting means depending on the deviation in the angle of rotation (Dw), wherein the rotary valve (14) permits in a first angle region (I) a pressure compensation between an ambient pressure and the pressure in the pressure chamber (10), and in a second angle region (II) adjacent to the first angle region (I), as the angle of rotation increases, sets a pressure in the pressure chamber (10), and wherein the sensor (22, 22', 22") comprises a magnetic reference sensor (66, 66', 66") that generates a reference signal when the magnetic field acts in a predetermined reference angle region such that, starting out from the reference angle region, suitable angles of rotation for controlling the pressure can be set, wherein when the angle of rotation (W) is adjusted a relative rotation takes place between the magnetic field and the magnetic field sensor (58, 58', 58") and wherein the setting means (40) sets the angle of rotation at the rotary valve (14) first depending on the deviation in the angle of rotation (Dw) and then depending on the pressure deviation (Dp).

2. Apparatus according to claim 1, **characterized in that** the desired angle of rotation (Sw) allocated to a specific desired pressure (Sp) is determined depending on the actual angle of rotation (Iw), with the aid of a static characteristic curve of the actual pressure (Ip).

3. Apparatus according to claim 1 or 2, **characterized in that** at first a rough setting of the pressure in the pressure chamber (10) takes place by adjustment of the desired angle of rotation (Sw) allocated to the desired pressure (Sp) depending on the deviation in the angle of rotation (Dw), and subsequently a fine regulation takes place on the basis of the pressure deviation (Dp).

4. Apparatus according to one of the claims 1 to 3, **characterized in that** the rotary valve (14) is a rotary piston valve (14) and **in that** in the second angle region (II), as the angle of rotation increases, an at least approximately linearly running pressure is set in the pressure chamber.

5. Apparatus according to one of the claims 1 to 4, **characterized in that** the reference angle region lies approximately between - 45° and - 20° with respect to the angle 0° at the zero crossing of the electric signal (90, 150) of the magnetic field sensor (58, 58', 58").

6. Apparatus according to one of the claims 1 to 5, **characterized in that** the rotary valve is a rotary piston valve (14) that permits in a first angle region (I) a pressure compensation between an ambient pressure and the pressure in the pressure chamber (10) and **in that**, in a second angle region (II) adjacent to the first angle region (I), as the angle of rotation increases, the rotary piston valve (14) sets a pressure in the pressure chamber (10) that increases or decreases continuously, preferably running at least approximately linearly.

7. Apparatus according to claim 6, **characterized in that** the second angle region (II) lies approximately between - 35° and 35° in respect to the angle 0° at the zero crossing of the electric signal (90, 150) of the magnetic field sensor (58, 58').

8. Apparatus according to one of the claims 1 to 7, **characterized in that** the magnetic arrangement contains a carrier (54, 54') that rotates about an axis of rotation (80) running through the magnetic field sensor, a first permanent magnet (50, 50', 50") being fastened to a first end of the carrier (54, 54', 54"), and a second permanent magnet (52, 52', 52") being fastened to a second end of the carrier (54, 54', 54"), with a pole arrangement (N, S) running in an opposite direction, in the direction of the axis of rotation (80, 80').

9. Apparatus according to claim 8, **characterized in that** the permanent magnets (50, 50', 50"; 52, 52', 52") have an at least approximately equal spacing from the axis of rotation (80, 80').

10. Apparatus according to claim 8 or 9, **characterized in that** the carrier (54, 54', 54") is made of a material with a low magnetic resistance, preferably of iron.

11. Apparatus according to one of the claims 1 to 10, **characterized in that** the reference sensor (66, 66', 66") is a Hall switch switched by the first permanent magnet (50, 50', 50").

12. Apparatus according to one of the claims 1 to 11, **characterized in that** a further permanent magnet (110, 110'), which has a pole arrangement corresponding to the first permanent magnet (50', 50") and is oriented in the direction of the axis of rotation (80'), with a greater spacing from the axis of rotation (80'), is arranged on the first end of the carrier (54, 54', 54"), wherein the magnetic reference sensor (66', 66") has at least approximately the greater spacing from the axis of rotation (80').

13. Apparatus according to one of the claims 1 to 12, **characterized by** a further magnetic field sensor (130) that is arranged so as to be rotated by about -45° relative to the first magnetic field sensor (58").

14. Apparatus according to one of the claims 1 to 13, **characterized by** reference sensors whose reference angle regions are adjacent to one another and cover an angle region of 360° in a defined way.

15. Sensor arrangement for acquiring the angle of rotation (W) of a rotary valve (14), comprising: a magnetic field sensor (58, 58', 58") for generating an electric signal with an at least approximately sinusoidal curve (90, 150) depending on the direction of a magnetic field that penetrates the magnetic field sensor (58, 58', 58"), and having a magnetic arrangement for generating the magnetic field, wherein, when the angle of rotation (W) is adjusted, a relative rotation takes place between the magnetic field and the magnetic field sensor, **characterized in that** by means of the sensor arrangement the pressure in the pressure chamber (10) is controlled, wherein the rotary valve permits in a first angle region (I) a pressure compensation between an ambient pressure and the pressure in the pressure chamber (10), and wherein the rotary valve (14), in a second angle region (II) adjacent to the first angle region (I), as the angle of rotation increases, sets a continuously increasing or decreasing pressure in the pressure chamber (10) and wherein the sensor arrangement comprises a magnetic reference sensor (66, 66', 66") which generates a reference signal when the magnetic field acts in a predetermined reference angle region such that, starting out from the reference angle, suitable angles of rotation for controlling the pressure can be set.

16. Sensor according to claim 15, **characterized in that** the reference angle region lies approximately between - 45° and - 20° with respect to the angle 0° at the zero crossing of the electric signal (90, 150) of the magnetic field sensor (58, 58', 58").

17. Sensor according to claim 15 or 16, **characterized in that** the relative rotation takes place depending on the angle of rotation (W) of a rotary valve adjusting a pressure in a pressure chamber (10).

18. Sensor according to one of the claims 15 to 17, **characterized in that** the rotary valve is a rotary piston valve (14), and **in that** it sets in the second angle region (II) the pressure in the pressure chamber (10) at least approximately linearly to the angle of rotation.

19. Sensor according to claim 18, **characterized in that** the second angle region (II) lies approximately between - 35° and 35° with respect to the angle 0° at the zero crossing of the electric signal (90, 150) of the magnetic field sensor (58, 58').

20. Sensor according to one of the claims 15 to 19, **characterized in that** the magnetic arrangement contains a carrier (54, 54') that rotates about an axis of rotation (80) running through the magnetic field sensor, a first permanent magnet (50, 50', 50") being fastened to a first end of the carrier (54, 54', 54"), and a second permanent magnet (52, 52', 52") being fastened to a second end of the carrier (54, 54', 54"), with a pole arrangement (N, S) running in an opposite direction, in the direction of the axis of rotation (80, 80').

21. Sensor according to claim 20, **characterized in that** the permanent magnets (50, 50', 50"; 52, 52', 52") have an at least approximately equal spacing from the axis of rotation (80, 80').

22. Sensor according to claim 20 or 21, **characterized in that** the carrier (54, 54', 54") is made of a material with a low magnetic resistance, preferably of iron.

23. Sensor according to one of the claims 15 to 22, **characterized in that** the reference sensor (66, 66', 66") is a Hall switch switched by the first permanent magnet (50, 50', 50").

24. Sensor according to one of the claims 20 to 23, **characterized in that** a further permanent magnet (110, 110'), which has a pole arrangement corresponding to the first permanent magnet (50', 50") and is oriented in the direction of the axis of rotation (80'), with a greater spacing from the axis of rotation (80'), is arranged on the first end of the carrier (54, 54', 54"), wherein the magnetic reference sensor (66', 66") has at least approximately the greater spacing from the axis of rotation (80').

25. Sensor according to one of the claims 15 to 24, **characterized by** a further magnetic field sensor (130) that is arranged so as to be rotated by about -45° relative to the first magnetic field sensor (58").

26. Sensor according to one of the claims 15 to 26, **characterized by** reference sensors, the reference angle regions of which are adjacent to one another and cover an angle region of 360° in a defined manner.

## Revendications

1. Dispositif pour réguler la pression dans la chambre de pression (10) d'un dispositif de freinage pneumatique destiné à un support d'impression (12) à l'intérieur d'un appareil d'enregistrement, comportant
une valve rotative (14) destinée à régler une pression réelle (Ip) dans la chambre de pression (10) en fonction d'un angle de rotation réel (Iw),
un capteur (22, 22', 22'') destiné à détecter l'angle de rotation réel (Iw),
un capteur de pression (24) destiné à détecter la pression réelle (Ip), et
une commande (26) destinée à fixer à l'avance une pression théorique (Sp) et un angle de rotation théorique (Sw) associé, en fonction de propriétés du support d'impression (12) et/ou de paramètres de fonctionnement lors l'enregistrement,
la commande (26) déterminant un écart de pression (Dp) entre la pression réelle (Ip) et la pression théorique (Sp), ainsi qu'un écart d'angle de rotation (Dw) entre l'angle de rotation réel (Iw) et l'angle de rotation théorique (Sw) de la valve rotative (14), et
la commande (26) commandant un dispositif de réglage (40) destiné à régler l'angle de rotation (W) de la valve en fonction de l'écart de pression (Dp), le capteur (22, 22', 22'') destiné à détecter l'angle de rotation comportant un dispositif magnétique destiné à générer un champ magnétique, et un capteur de champ magnétique (58, 58', 58") destiné à générer un signal électrique,
**caractérisé en ce que** la commande (26) commande le dispositif de réglage également en fonction de l'écart d'angle de rotation (Dw), la valve rotative (14) permettant dans une première plage angulaire (I) une compensation de pression entre une pression ambiante et la pression régnant dans la chambre de pression (10), et réglant, dans une deuxième plage angulaire (II), qui est adjacente à la première plage angulaire (I), d'angle de rotation croissant, une pression dans la chambre de pression (10), et le capteur (22, 22', 22") comportant un capteur magnétique de référence (66, 66', 66'') qui génère, sous l'action du champ magnétique, un signal de référence dans une plage angulaire de référence prédéterminée,
et **en ce que** des angles de rotation appropriés peuvent être réglés à partir de la plage angulaire de référence en vue de réguler la pression, une rotation relative entre le champ magnétique et le capteur de champ magnétique (58, 58', 58'') étant effectuée sous l'action du champ magnétique lors du réglage de l'angle de rotation (W), et le dispositif de réglage (40) réglant l'angle de rotation au niveau de la valve rotative (14) tout d'abord en fonction de l'écart d'angle de rotation (Dw), puis en fonction de l'écart de pression (Dp).

2. Dispositif selon la revendication 1, **caractérisé en ce que** l'angle de rotation théorique (Sw) associé à une pression théorique (Sp) déterminée, est déterminé à l'aide d'une caractéristique statique de la pression réelle (Ip) en fonction de l'angle de rotation réel (Iw).

3. Dispositif selon la revendication 1 ou 2, **caractérisé en ce qu'**un réglage grossier de la pression régnant dans la chambre de pression (10) est tout d'abord effectué en réglant l'angle de rotation théorique (Sw) associé à la pression théorique (Sp) en fonction de l'écart d'angle de rotation (Dw), puis un réglage fin est effectué en se fondant sur l'écart de pression (Dp).

4. Dispositif selon l'une des revendications 1 à 3, **caractérisé en ce que** la valve rotative (14) est une valve rotative à piston (14), et **en ce qu'**une pression d'allure au moins à peu près linéaire est réglée dans la chambre de pression, dans la deuxième plage angulaire (II) d'angle de rotation croissant.

5. Dispositif selon l'une des revendications 1 à 4, **caractérisé en ce que** la plage angulaire de référence est sensiblement comprise entre -45° et -20° par rapport à l'angle 0° au passage par zéro du signal électrique (90, 150) du capteur de champ magnétique (58, 58', 58'').

6. Dispositif selon l'une des revendications 1 à 5, **caractérisé en ce que** la valve rotative est une valve rotative à piston (14), qui permet une compensation de pression entre une pression ambiante et la pression régnant dans la chambre de pression (10) dans une première plage angulaire (I), et **en ce que** la valve rotative à piston (14) règle, dans une deuxième plage angulaire (II), adjacente à la première plage angulaire (I), d'angle de rotation croissant, une pression continûment croissante ou décroissante, de préférence d'allure au moins à peu près linéaire, dans la chambre de pression (10).

7. Dispositif selon la revendication 6, **caractérisé en ce que** la deuxième plage angulaire (II) est comprise sensiblement entre -35° et 35° par rapport à l'angle 0° au passage par zéro du signal électrique (90, 150) du capteur de champ magnétique (58, 58').

8. Dispositif selon l'une des revendications 1 à 7, **caractérisé en ce que** le dispositif magnétique comporte un support (54, 54') tournant autour d'un axe de rotation (80) passant par le capteur de champ magnétique, un premier aimant permanent (50, 50', 50'') étant fixé à une première extrémité du support (54, 54', 54''), et un deuxième aimant permanent (52, 52', 52''), dont l'agencement des polarités (N, S) est opposé à la direction de l'axe de rotation (80, 80'), étant fixé à une deuxième extrémité du support (54, 54', 54'').

9. Dispositif selon la revendication 8, **caractérisé en ce que** les aimants permanents (50, 50', 50"; 52, 52', 52") sont au moins à peu près à équidistance de l'axe de rotation (80, 80').

10. Dispositif selon la revendication 8 ou 9, **caractérisé en ce que** le support (54, 54', 54'') est constitué d'un matériau de faible résistance magnétique, de préférence du fer.

11. Dispositif selon l'une des revendications 1 à 10, **caractérisé en ce que** le capteur de référence (66, 66', 66'') est un capteur à effet Hall couplé par le premier aimant permanent (50, 50', 50'').

12. Dispositif selon l'une des revendications 1 à 11, **caractérisé en ce que**, à la première extrémité du support (54, 54', 54''), est agencé un autre aimant permanent (110, 110'), orienté en direction de l'axe de rotation (80'), dont l'agencement des polarités correspond à celui du premier aimant permanent (50, 50') et qui est placé à une plus grande distance de l'axe de rotation (80'), le capteur magnétique de référence (66', 66'') étant placé au moins à peu près à une plus grande distance de l'axe de rotation (80').

13. Dispositif selon l'une des revendications 1 à 12, **caractérisé par** un autre capteur de champ magnétique (130) qui est agencé sensiblement à -45° par rapport au premier capteur de champ magnétique (58").

14. Dispositif selon l'une des revendications 1 à 13, **caractérisé par** des capteurs de référence dont les plages angulaires de référence sont adjacentes et couvrent de façon définie une plage angulaire de 360°.

15. Agencement de capteurs destiné à détecter l'angle de rotation (W) d'une valve rotative (14), comportant : un capteur de champ magnétique (58, 58', 58''), destiné à générer un signal électrique d'allure au moins à peu près sinusoïdale (90, 150) en fonction de la direction d'un champ magnétique passant par le capteur de champ magnétique (58, 58', 58''), et un dispositif magnétique destiné à générer le champ magnétique, une rotation relative entre le champ magnétique et le capteur de champ magnétique étant effectuée lors du réglage de l'angle de rotation (W),
**caractérisé en ce que** l'agencement de capteurs permet de réguler la pression dans une chambre de pression (10), la valve rotative permettant, dans une première plage angulaire (I), une compensation de pression entre une pression ambiante et la pression régnant dans la chambre de pression (10), et la valve rotative (14) réglant, dans une deuxième plage angulaire (II), adjacente à la première plage angulaire (I), d'angle de rotation croissant, une pression continûment croissante ou décroissante dans la chambre de pression (10), et l'agencement de capteurs comportant un capteur magnétique de référence (66, 66', 66'') qui génère un signal de référence dans une plage angulaire de référence prédéterminée sous l'action du champ magnétique de telle sorte que des angles de rotation appropriés peuvent être réglés à partir de l'angle de référence en vue réguler la pression.

16. Capteur selon la revendication 15, **caractérisé en ce que** la plage angulaire de référence est sensiblement comprise entre -45° et -20° par rapport à l'angle 0° au passage par zéro du signal électrique (90, 150) du capteur de champ magnétique (58, 58', 58").

17. Capteur selon la revendication 15 ou 16, **caractérisé en ce que** la rotation relative est effectuée en fonction de l'angle de rotation (W) d'une valve rotative réglant une pression dans une chambre de pression (10).

18. Capteur selon l'une des revendications 15 à 17, **caractérisé en ce que** la valve rotative est une valve rotative à piston (14), et **en ce qu'**elle règle, dans une deuxième plage angulaire (II), la pression régnant dans la chambre de pression (10) au moins à peu près linéairement par rapport à l'angle de rotation.

19. Capteur selon la revendication 18, **caractérisé en ce que** la deuxième plage angulaire (II) se trouve sensiblement entre -35° et 35° par rapport l'angle 0° au passage par zéro du signal électrique (90, 150) du capteur de champ magnétique (58, 58').

20. Capteur selon l'une des revendications 15 à 19, **caractérisé en ce que** le dispositif magnétique comporte un support (54, 54') tournant autour d'un axe de rotation (80) passant par le capteur de champ magnétique, un premier aimant permanent (50, 50', 50'') étant fixé à une première extrémité du support (54, 54', 54''), et un deuxième aimant permanent (52, 52', 52''), dont l'agencement des polarités (N, S) est opposé à la direction de l'axe de rotation (80, 80'), étant fixé à une deuxième extrémité du support (54, 54', 54'').

21. Capteur selon la revendication 20, **caractérisé en ce que** les aimants permanents (50, 50', 50'' ; 52, 52', 52'') sont au moins à peu à équidistance de l'axe de rotation (80, 80').

22. Capteur selon la revendication 20 ou 21, **caractérisé en ce que** le support est constitué d'un matériau de faible résistance magnétique, de préférence du fer.

23. Capteur selon l'une des revendications 15 à 22, **caractérisé en ce que** le capteur de référence (66, 66', 66'') est un capteur à effet Hall couplé par le premier aimant permanent (50, 50', 50'').

24. Capteur selon l'une des revendications 1 à 23, **caractérisé en ce que**, à la première extrémité du support (54, 54', 54''), est agencé un autre aimant permanent (110, 110'), orienté en direction de l'axe de rotation (80'), dont l'agencement des polarités correspond à celui du premier aimant permanent (50', 50"), et qui est placé à une plus grande distance de l'axe de rotation (80'), le capteur magnétique de référence (66', 66'') étant placé au moins à près peu à une plus grande distance de l'axe de rotation (80').

25. Capteur selon l'une des revendications 15 à 24, **caractérisé par** un autre capteur de champ magnétique (130) qui est agencé sensiblement à 45° par rapport au premier capteur de champ magnétique (58'').

26. Capteur selon l'une des revendications 15 à 26, **caractérisé par** des capteurs de référence dont les plages angulaires de référence sont adjacentes et couvrent de façon définie une plage angulaire de 360°.
